# EUROPEAN PATENT SPECIFICATION

(11) **EP 0 688 093 B1**
(45) Date of publication and mention of the grant of the patent: **06.10.1999**
(21) Application number: 95109379.8
(22) Date of filing: 16.06.1995
(51) Int. Cl.: H02P 6/08, H02K 29/00

(54) **An improved direct current and permanent magnet brushless electric motor**
Verbesserter Bürstenlosegleichstrommotor mit Dauermagneten
Moteur électrique sans balai à courant continu et aimant permanent amélioré

(30) Priority: 17.06.1994 IT TO940500
(43) Date of publication of application: 20.12.1995
(73) Proprietor: ELECTRO-PARTS S.p.A., 12060 Bossolasco (CN) (IT)
(72) Inventor: Falcone, Giovanni, I-12060 Bossolasco(CN) (IT)
(74) Representative: Lotti, Giorgio

(56) References cited:
- US-A- 3 967 174
- PATENT ABSTRACTS OF JAPAN vol. 8 no. 74 (E-236) [1511] ,6 April 1984 & JP-A-58 222770 (MATSUSHITA DENKI SANGYO KK) 24 December 1983,
- IEEE TRANSACTIONS ON ENERGY CONVERSION, vol. 4, no. 3, September 1989 NEW YORK US, pages 473-479, XP 000039111 J.S. MAYER ET AL. 'ANALYSIS AND MODELING OF A SINGLE-PHASE BRUSHLESS DC MOTOR DRIVE SYSTEM'
- RESEARCH DISCLOSURE, no. 320, December 1990 HAVANT GB, page 987 XP 000163398 'Brushless Motor Configuration for Achieving Alternately High Torque Per Ampere and High Speed Performance'

## Description

The present invention pertains to a direct current electric motor of the brushless kind having permanent magnets.

Brushless electric motors are particularly applied within the automobile field for radiator cooling fans or passenger compartment ventilation fans. At present, the solution that is adopted with brush motors to command speed variation of the rotor and the fan mounted thereto provides selective activation of one or more electric dissipating resistors, the number of which corresponds to different speeds that can be selected. When connected, said dissipating resistors absorb part of the power supplied to the electric motor. This power absorption causes the rotor to slow down, decreasing the throw of the relevant cooling fan.

As will be apparent, this prior art device represents a waste of energy, as the overall power supplied for the motor is partially dissipated by the resistors regardless of the motor speed. Therefore, in many cases the power source is exploited more than it would be necessary, with obvious drawbacks deriving. Further, conventional power dissipating resistors are usually located in places where they are not completely safe from being damaged, so that they are frequently subject to failures that compromise proper operation of the electric motor.

The aforementioned inconveniences are partly overcame by the direct current electric motor of the brushless kind described in the Japanese Patent Application JP-A-58222770, in which the electric motor comprises permanent magnets arranged with alternating poly and fitted to the rotor, and two groups of windings, each one of them being wound according to opposite current, and comprising one coil; and rotor speed commutator means defined by two transistors alternately switched to energize or deenergize said coils or rather varying the energy of each coil.

It is an object of the present invention to overcome the aforesaid prior art inconveniences and limits by providing a brushless kind of electric motor where the rotor speed can be changed without varying the supply voltage and without using the coils as inductance to accumulate energy, in such a way that the power absorbed by the motor substantially corresponds to the power required to drive the motor.

It is another object of the present invention to provide an electric motor of the aforesaid kind which can be assembled easily and quickly, strong, durable, and having reduced overall dimensions and other qualities that render it advantageous for mass production such as that of automobile manufacturing.

These and further objects and advantages, which will be apparent from the following description, are attained according to the invention by a direct current electric motor of the brushless kind having permanent magnets arranged with alternating poles fitted to the rotor, two groups of windings wound according to opposite current directions; rotor speed commutator means; characterised in that each group of windings is formed by a plurality of coils, at least one coil of each group of coils being selectively cut out from current supply by said rotor speed commutator means; the motor further comprising an electronic circuit adapted for allowing sequential current supply to all of the motor coils during the initial starting rotation of the rotor assembly and allowing current supply, once the motor has reached its predetermined nominal speed, only to those coils which have been selected by said commutator means.

The structural and operational features of a preferred but not exclusive embodiment of an electric motor according to the invention are described hereinafter with reference to the accompanying drawings, in which:
FIG. 1 is an axial section view of a fan fitted with a motor according to the invention;
FIG. 2 is a transversal cross-section view of the motor taken along the line II-II of FIG. 1;
FIG. 3 shows a pattern of the coils disposed on the motor according to the invention; and
FIG. 4 is a wiring diagram of a logic card for controlling the motor of this invention.

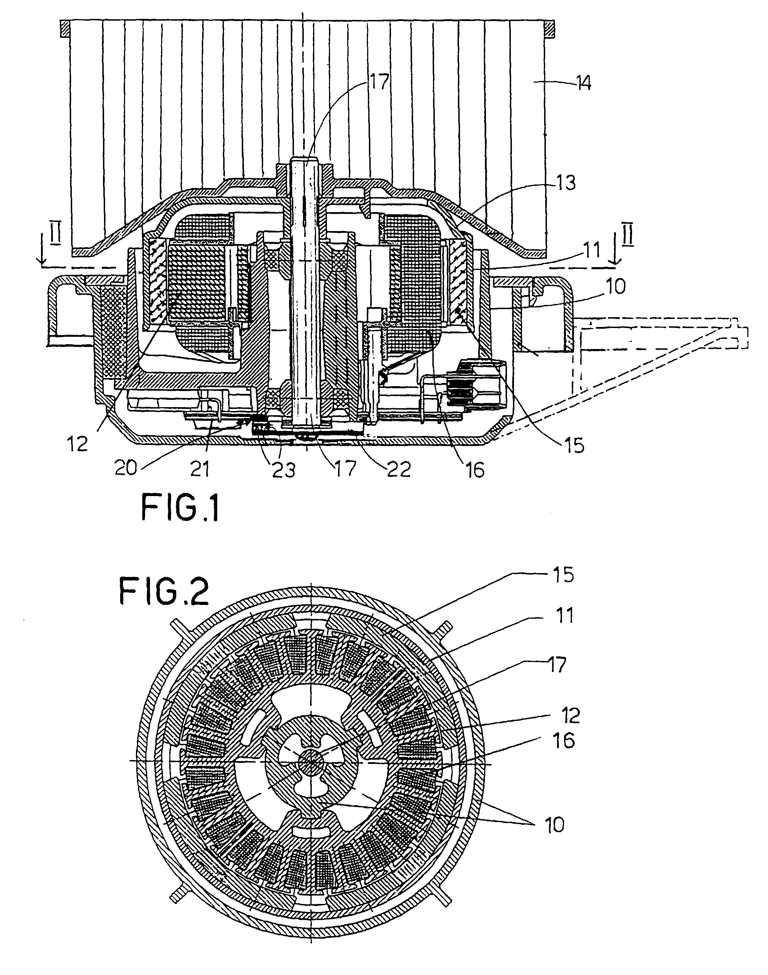

With initial reference to FIGS. 1 and 2, numeral 10 indicates the outer body of a permanent magnet brushless electric motor. The rotor, indicated overall by numeral 11, is external with respect to stator 12. Rotor 11 rotates a conventional fan 14 of the kind normally used in automobile ventilating systems through an iron ring or cap 13. Fixed to the inner face of cap 13, preferably by gluing, are four equally spaced magnets 15 with alternately arranged poles N-S-N-S. Fan 14 and rotor 11 rotate integral with a central shaft 17 rotatably supported by body 10.

In the present embodiment (FIG. 2), the windings 16 are disposed in the slots of the stationary stator according to a four-pole and four-coil arrangement that allows commutation between two speeds. However, it is understood that the number of poles and coils may vary according to requirements, in a manner known to those skilled in the art, e.g. providing arrangements with 6 poles and 4 coils, 6 poles and 6 coils, 8 poles and 4 coils, 8 poles and 6 coils, 12 poles and 6 coils, etc., in order to select any of three, four, etc., different speeds.

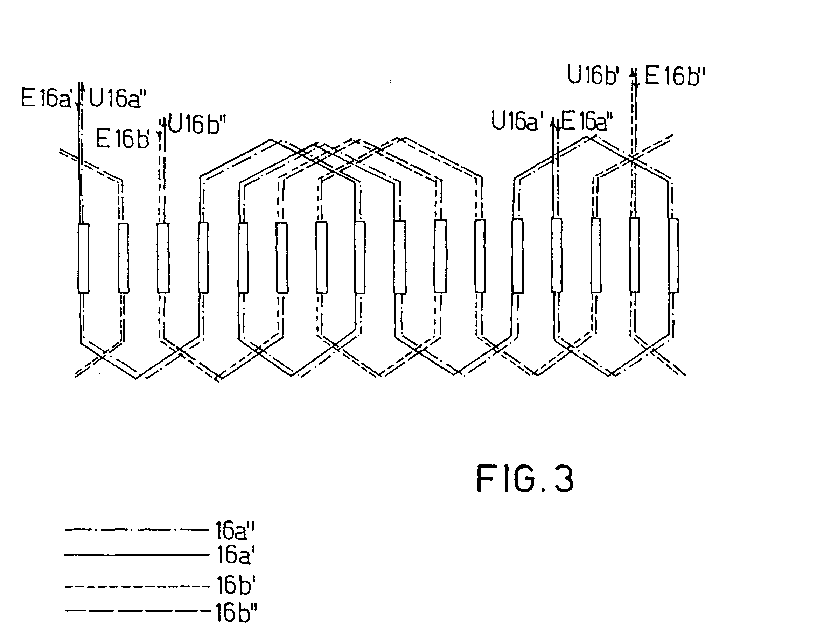

The windings 16 are formed by four radially flanking coils 16a', 16b', 16a", 16b" wound in pairs onto the stator according to opposite current directions. Each coil is indicated in FIG. 3 by an apex (') or ("). In the drawing, coil inputs and outputs are respectively indicated by reference numerals E16a', E16a", E16b', E16b", U16a', U16a", U16b', U16b".

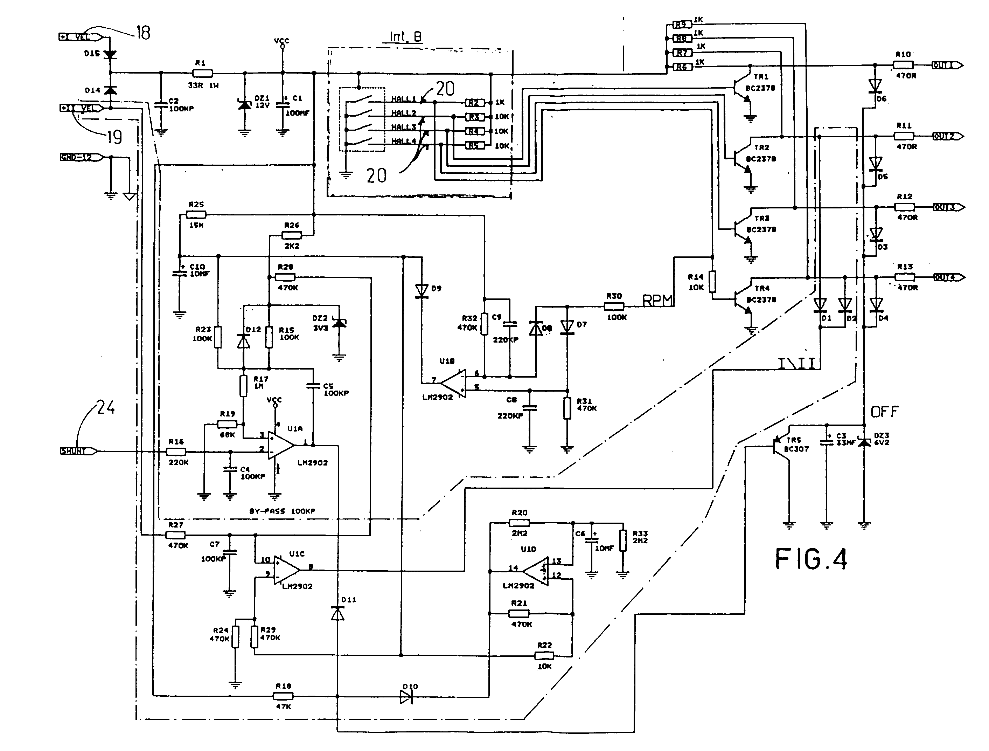

Alternate current is supplied to the windings 16 by the control electronic circuit shown in FIG. 4. The control electronic circuit is fitted on a logic card 21 (shown in FIG. 1) which is fixed to motor body 10.

Still referring to FIGS. 1 and 4, the electronic circuit on logic card 21 alternately commands current passage in one of the four coils 16a', 16a", 16b', 16b". One of the two coils of each pair of coils can be cut out by means of four switch units 20 having Hall effect sensors responsive to the stator and rotor mutual position.

In order to adjust the duration and frequency with which current passes through each winding, a disc 22 is secured to an end of rotating shaft 17. Disc 22 is made of a material having low magnetic permeability, preferably synthetic material. A plurality of small magnetic units, indicated schematically with 23 in FIG. 1, are disposed on the side of disc 22 facing logic card 21. Said magnetic units are located so as to be operatively facing the stationary Hall sensor units 20 during rotation of the rotor assembly. More particularly, the magnetic units 23 are arranged so as to face a respective Hall effect magnetic switch 20 one at a time.

The magnetic units 23 and the permanent magnets 15 are suitably timed and arranged for co-operating with the circuit of logic card 21 and the coils 16a', 16a", 16b', 16b" to get the rotor to run regularly.

Operation of the motor is as follows. In starting the motor, the switch 20 near to a magnetic unit 23 closes and allows current supply to the corresponding coil. The current flowing through the coil generates a magnetic field opposite to that of permanent magnets 15. As known, such an opposition of magnetic fields generates a torque that causes the rotor to rotate. This sequence is repeated, during initial rotation of the rotor, for each of the four coils.

With reference to FIG. 4, the electronic circuit of logic card 21 allows either input 18 to be selected to command four-coil operation, which corresponds to the higher speed, or input 19 to command two-coil operation corresponding to the lower speed. In this latter case, by selecting input 19 speed is commutated from high to low, cutting out two of the four coils. Therefore, the overall current passing through the windings decreases, and consequently does also the magnetic flux generated by the electric current and the torque deriving therefrom induced in the rotor permanent magnets 15.

Referring to the electronic circuit of FIG. 4, the portion of circuit comprised within the dotted line is arranged so that all of the coils are current supplied in sequence during the initial starting rotation, also those which have eventually been cut out by the above commutation in selecting the lower speed. Upon reaching the predetermined nominal r.p.m., this part of the circuit provides current supply only to the two coils which have been selected by commutation of inputs 18 or 19.

As an alternative to the above described system, control of the electric pulses in the windings may be carried out by an integrated circuit (not shown) capable of performing the same operations of the aforesaid arrangement with Hall effect sensors and rotating magnets.

As will be apparent, the motor according to the invention allows to attain the following advantages, closely connected therebetween:
- compact construction;
- safe operation;
- inexpensiveness;
- extended lifetime.

The invention is not limited to the described illustrations, which are to be considered as merely representative of the best embodiment of the electric motor, and which can be modified in the terms of form, dimensions and arrangement of the parts and of constructional and operational details. The invention covers all modifications falling within its scope, as defined by the following claims.

## Claims

1. A direct current electric motor of the brushless kind having permanent magnets (15) arranged with alternating poles fitted to the rotor (11), two groups (16a, 16b) of windings (16) wound according to opposite current directions; and rotor speed commutator means (18-23); characterised in that each group of windings is formed by a plurality of coils, at least one coil (16'a, 16'b) of each group of coils being selectively cut out from current supply by said rotor speed commutator means (18-23) ; the motor further comprising an electronic circuit adapted for allowing sequential current supply to all of the motor coils during the initial starting rotation of the rotor assembly and allowing current supply, once the motor has reached its predetermined nominal speed, only to those coils which have been selected by said commutator means.

2. An electric motor according to claim 1, characterised in that said speed commutator means comprise a plurality of inputs (18, 19) capable of being selectively activated and connected to at least one actuator means for cutting out at least one coil of each group of coils.

## Patentansprüche

1. Bürstenloser Gleichstrom-Elektromotor mit Permanentmagneten (15), die mit wechselnden Polen am Rotor (11) befestigt sind, zwei Gruppen (16a, 16b) von Wicklungen (16), die gemäß entgegengesetzten Stromrichtungen gewickelt sind, und Rotordrehzahl-Kollektoren (18-23),
dadurch gekennzeichnet,
daß jede Gruppe von Wicklungen durch eine Vielzahl von Spulen gebildet ist, wobei wenigstens eine Spule (16'a, 16'b) jeder Gruppe von Spulen durch die Rotordrehzahl-Kollektoren (18-23) selektiv von der Stromzufuhr abgeschnitten wird; der Motor umfaßt des weiteren eine elektronische Schaltung, die geeignet ist, während der anfänglichen Startdrehung der Rotoranordnung sequentielle Stromzufuhr zu allen Motorspulen zuzulassen und, sobald der Motor seine vorbestimmte Nenndrehzahl erreicht hat, Stromzufuhr nur zu denjenigen Spulen zuzulassen, die von den Kollektoren ausgewählt worden sind, zuzulassen.

2. Elektromotor nach Anspruch 1,
dadurch gekennzeichnet,
daß die Drehzahlkollektoren eine Vielzahl von Eingaben (18, 19) umfassen, die selektiv aktiviert und mit wenigstens einer Betätigungsvorrichtung zum Abschneiden wenigstens einer Spule aus jeder Gruppe von Spulen verbunden werden können.

## Revendications

1. Moteur électrique à courant continu du type sans balais, présentant des aimants permanents (15) agencés avec des pôles alternatifs montés sur le rotor (11), deux groupes (16a, 16b) d'enroulements (16) étant enroulés selon des sens de courant opposés ; et un moyen (18 à 23) formant commutateur de vitesse de rotor ; caractérisé en ce que chaque groupe d'enroulements est constitué par une pluralité de bobines, au moins une bobine (16'a, 16'b) de chaque groupe de bobines étant coupée, de manière sélective, de l'alimentation en courant par ledit moyen (18 à 23) formant commutateur de vitesse de rotor, ledit moteur comprenant en outre un circuit électronique conçu pour permettre une alimentation en courant séquentielle de toutes les bobines du moteur au cours de la rotation de démarrage initial de l'ensemble de rotor, et pour permettre l'alimentation en courant, une fois que le moteur a atteint sa vitesse nominale prédéterminée, uniquement de celles des bobines qui ont été sélectionnées par ledit moyen formant commutateur.

2. Moteur électrique selon la revendication 1, caractérisé en ce que ledit moyen formant commutateur de vitesse comprend une pluralité d'entrées (18,19) qui peuvent être activées, de manière sélective, et connectées à au moins un moyen activateur pour couper au moins une bobine de chaque groupe de bobines.
